(19) Europäisches Patentamt
European Patent Office
Office européen des brevets

(11) **EP 4 764 223 A1**

(12) **EUROPÄISCHE PATENTANMELDUNG**

(43) Veröffentlichungstag:
**24.06.2026 Patentblatt 2026/26**

(21) Anmeldenummer: **25215801.9**

(22) Anmeldetag: **14.11.2025**

(51) Internationale Patentklassifikation (IPC):
**F04D 29/02** *(2006.01)* **F04D 29/30** *(2006.01)*
**F04D 29/38** *(2006.01)*

(52) Gemeinsame Patentklassifikation (CPC):
**F04D 29/30; F04D 29/023; F04D 29/384;**
F05D 2240/303; F05D 2240/304; F05D 2250/182;
F05D 2250/183; F05D 2250/184

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **17.12.2024 DE 102024138293**

(71) Anmelder: **Mahle International GmbH
70376 Stuttgart (DE)**

(72) Erfinder:
• **Mayot, Florian
01609 Tiefenau (DE)**
• **Hofmann, Herbert
70806 Kornwestheim (DE)**
• **Wenner, Matteo
70176 Stuttgart (DE)**

(54) **LÜFTERRAD UND LÜFTER**

(57) Die vorliegende Erfindung betrifft ein Lüfterrad (1) für einen Lüfter (2) mit zumindest zwei Lüfterblätter (3), die an einer jeweiligen Blattvorderkante (4) eine wellen- oder zackenartige Konturlinie (5) mit Vorsprüngen (6) und Ausnehmungen (7) aufweisen.

Erfindungswesentlich ist dabei, dass ein Verhältnis einer Höhe A der Vorsprünge (6) zu einer Wellenlänge W von einem Wellental (9) zu einem Wellental (9) wie folgt definiert ist

$$A/W \geq 1.$$

Hierdurch kann ein effizientes und geräuscharmes Lüfterrad (1) geschaffen werden.

**EP 4 764 223 A1**

**(Forts. nächste Seite)**

**Fig. 1**

## Beschreibung

Die vorliegende Erfindung betrifft ein Lüfterrad für einen Lüfter mit zumindest zwei Lüfterblätter, gemäß dem Oberbegriff des Anspruchs 1. Die Erfindung betrifft außerdem einen Lüfter, insbesondere für ein Klimatisierungsgerät eines Elektrofahrzeugs, mit einem solchen Lüfterrad.

Aus der US 11035233 B2 ist ein gattungsgemäßes Lüfterrad für einen Lüfter mit zumindest zwei Lüfterblätter bekannt, die an einer jeweiligen Blattvorderkante eine wellen-oder zackenartige Konturlinie mit Vorsprüngen und Ausnehmungen aufweist.

Aus der WO 2013/180296 A1 ist ein weiteres gattungsgemäßes Lüfterrad für einen Lüfter bekannt.

Lüfter werden in Kraftfahrzeugen, insbesondere auch in batterieelektrisch betriebenen Kraftfahrzeugen (BFV), in vielfältiger Weise eingesetzt, wobei insbesondere ein Augenmerk auf eine Effizienz und eine Geräuschemission eines derartigen Lüfters gerichtet ist. Besonders bei Elektrofahrzeugen wirkt sich die Effizienz direkt auf den Stromverbrauch eines Lüftermotors und damit auf die Reichweite des Elektrofahrzeugs aus. Zudem kommt in Elektrofahrzeugen auch eine Geräuschemission eine erhöhte Bedeutung zu, da diese deutlich leiser sind, als verbrennungsmotorisch angetriebenen Kraftfahrzeugen. Lüfter werden dabei in Elektrofahrzeugen, insbesondere auch für Thermomanagementmodule eingesetzt, die einer Temperierung, insbesondere einer Kühlung, einer Fahrzeugbatterie dienen. Eine Temperierung einer solchen Fahrzeugbatterie ist insbesondere deshalb wichtig, da ein Betrieb der Fahrzeugbatterie in einem optimalen Temperaturfenster nicht nur eine vergrößerte Reichweite ermöglicht, sondern bei einem Laden durch ein Kühlen auch eine Reduzierung einer Ladezeit.

Aus dem Stand der Technik bekannt sind bereits Lüfter Räder mit Lüfterblättern, die an einer in Drehrichtung gelegenen Blattvorderkante bzw. einer entgegen der Drehrichtung gerichteten Blatthinterkante eine wellen- oder zackenartige Konturlinie aufweisen, die als besonders wirkungsvolle Maßnahme zur Geräuschreduzierung genutzt werden.

Nachteilig bei den aus dem Stand der Technik bekannten Lüfterrädern ist jedoch, dass die gewählten Vorsprünge bzw. Ausnehmungen an der Wellen- oder zackenartige Konturlinie an einer Blattvorderkante bzw. einer Blatthinterkante keine optimalen Geometriegrößen aufweisen und dadurch die Effizienz des Lüfterblattes und damit indirekt des Lüfters nicht signifikant steigern können, ohne dabei deutlich höhere Geräuschemissionen in Kauf nehmen zu müssen.

Die vorliegende Erfindung beschäftigt sich daher mit dem Problem, für ein Lüfterrad der gattungsgemäßen Art eine verbesserte oder zumindest eine alternative Ausführungsform anzugeben, mittels welcher insbesondere die aus dem Stand der Technik bekannten Nachteile überwunden werden können.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, Vorsprünge und Ausnehmungen einer an einer Blattvorderkante angeordneten wellen- oder zackenförmigen Konturlinie hinsichtlich einer Höhe A der Vorsprünge und einer Wellenlänge W so zu gestalten, dass eine deutliche Steigerung der Effizienz ermöglicht wird, ohne dabei eine deutliche Steigerung der Geräuschemissionen in Kauf nehmen zu müssen. Erreicht wird dies dadurch, dass erfindungsgemäß ein Verhältnis einer Höhe A der Vorsprünge zu einer Wellenlänge W gemessen von Ausnehmung zu Ausnehmung, d. h. von Wellental zu Wellental, wie folgt definiert ist: $A/W \geq 1$. Durch ein derartig gewähltes Verhältnis ist sowohl ein effektiver, als auch ein geräuscharmer Betrieb eines mit einem solchen Lüfterrad ausgestatteten Lüfters möglich. Eine weitere Steigerung der Effizienz des Lüfters, ohne dabei höhere Geräuschemissionen in Kauf nehmen zu müssen, kann dadurch erreicht werden, dass das Verhältnis der Höhe A der Vorsprünge zur Wellenlänge W von Wellental zu Wellental $A/W \geq 1{,}5$, besonders bevorzugt $A/W \geq 2$ gewählt wird. Als oberer Grenzwert wird üblicherweise ein Verhältnis der Höhe A der Vorsprünge zur Wellenlänge W von Wellental zu Wellental bei ca. 4 angesetzt. Bei einem darüber liegenden Verhältnis wäre die Stabilität der einzelnen Vorsprünge unter Umständen nicht mehr gewährleistet. Mit einem entsprechend der Erfindung gestalten Lüfterrad lässt sich somit die Effizienz des Lüfters deutlich steigern, ohne dabei erhöhte Geräuschemissionen in Kauf nehmen zu müssen.

Bei einer weiteren vorteilhaften Ausführungsform des erfindungsgemäßen Lüfterrades entspricht eine Höhe A zumindest 10 % einer überströmten Länge BL des Lüfterblattes, bevorzugt zumindest 15 % einer überströmten Länge BL des Lüfterblattes und ganz besonders bevorzugt zumindest 20 % einer überströmten Länge BL des Lüfterblattes. Die jeweils gewählte überströmte Länge BL kann dabei beispielsweise in Abhängigkeit der Lüfterblätter gewählt werden.

Zweckmäßig erstreckt sich die Konturlinie nur bis ca. 70 %, bevorzugt nur bis ca. 50%, der radialen Länge des Lüfterblattes, d. h. die Konturlinie beginnt beispielsweise radial innen an einer Nabe des Lüfterrades bzw. beabstandet zu dieser und endet bei ca. 70 % der radialen Länge des Lüfterblattes, sodass die Konturlinie nicht über das gesamte Lüfterblatt nach außen verläuft. In Versuchen hat sich dabei gezeigt, dass die erfindungsgemäße Konturlinie ihre erfindungsgemäße Wirkung zur Erhöhung der Effizienz und zur Reduzierung der Geräuschemissionen auf bestimmte Umdrehungsgeschwindigkeiten beschränkt ist, sodass an einem radial äußeren Bereich des Lüfterblattes, in welchem im Betrieb höhere Umdrehungsgeschwindigkeiten auftreten, die Anordnung einer derartigen erfindungsgemäßen Konturlinie nicht vorteilhaft ist.

Bei einer weiteren vorteilhaften Ausführungsform des erfindungsgemäßen Lüfterrades beginnt die Konturlinie an der Nabe oder beabstandet zu dieser. Beide Ausführungsformen bieten dabei Vorteile hinsichtlich einer Fertigung, insbesondere, sofern das Lüfterrad beispielsweise als Kunststoffspritzgussteil ausgebildet ist.

Zweckmäßig ist zumindest ein Vorsprung in Umfangsrichtung relativ zum Lüfterblatt geneigt. Der große Vorteil einer derartigen Neigung des Vorsprungs in Umfangsrichtung relativ zum Lüfterrad liegt darin, dass der Vorsprung mit seiner Spitze bzw. seinem freien Ende stets in Richtung der Drehbewegung ausgerichtet ist und nicht schräg dazu.

Bei einer besonders bevorzugten Ausführungsform des erfindungsgemäßen Lüfterrades weist zumindest ein Vorsprung eine größere Dicke auf als das übrige Lüfterblatt. Ein derartiger Vorsprung mit größerer Dicke kann dabei fluchtend in das Lüfterblatt übergehen, wodurch aerodynamische Vorteile erreicht und Kerbspannungen aufgrund von Knicken bzw. Stufen vermieden werden können.

Bei einer besonders bevorzugten Ausführungsform des erfindungsgemäßen Lüfterblattes sind die Vorsprünge aus einem anderen Material ausgebildet als das Lüfterblatt. Denkbar ist hierbei beispielsweise, dass die Vorsprünge aus einer Metallleiste ausgebildet sind, während das Lüfterblatt aus Kunststoff ausgebildet ist, sodass in diesem Fall das Lüfterblatt und die Vorsprünge als 2-Komponenten-Kunststoffspritzgussteil ausgebildet sein können. Durch die Ausbildung der Vorsprünge beispielsweise aus Metall, können diese mit einem vergleichsweise großen Verhältnis A/W ausgestattet werden, ohne dass dabei im Betrieb des Lüfterrades eine Verformung der einzelnen Vorsprünge befürchtet werden muss.

Zweckmäßig kann das Lüfterrad an seiner Blatthinterkante ebenfalls eine wellen-oder zackenartige Konturlinie mit Vorsprüngen und Ausnehmungen aufweisen. Durch das Anordnen einer wellen- oder zackenartigen Konturlinie mit Vorsprüngen und Ausnehmungen auch an der Blatthinterkante können sowohl die Effizienz weiter gesteigert als auch die Geräuschemissionen weiter reduziert werden. Dabei ist denkbar, dass die an der Blatthinterkante angeordnete wellen- oder zackenartige Konturlinie analog zu der an der Blattvorderkante angeordneten erfindungsgemäßen wellen- oder zackenartigen Konturlinie ausgebildet ist.

Mittels einer Verbindung zweier benachbarter Vorsprünge kann die Festigkeit der Vorsprünge erhöht und dadurch ein besonders steifes und im Betrieb besonders geräuscharmes Lüfterrad geschaffen werden.

Die vorliegende Erfindung beruht weiter auf dem allgemeinen Gedanken, einen Lüfter mit einem in den vorherigen Absätzen beschriebenen erfindungsgemäßen Lüfterrad auszustatten, wodurch sich die bezüglich des erfindungsgemäßen Lüfterrades beschriebenen Vorteile auf den Lüfter übertragen lassen. Konkret liegen diese Vorteile insbesondere in einer erhöhten Effizienz eines derartigen Lüfters bei einer gleichzeitig geringen Geräuschemission. Hierdurch können die erfindungsgemäßen Lüfter, insbesondere in Elektrofahrzeugen, welche besonders geräuschsensibel sind, eingesetzt werden. Durch die verbesserte Effizienz kann auch ein stromsparender Betrieb des Lüfters erreicht werden, was beim Einsatz in Elektrofahrzeugen ebenfalls von großem Vorteil ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den durch die Ansprüche definierten Rahmen der Erfindung zu verlassen. Vorstehend genannte und nachfolgend noch zu nennende Bestandteile einer übergeordneten Einheit, wie z.B. einer Einrichtung, einer Vorrichtung oder einer Anordnung, die separat bezeichnet sind, können separate Bauteile bzw. Komponenten dieser Einheit bilden oder integrale Bereiche bzw. Abschnitte dieser Einheit sein, auch wenn dies in den Zeichnungen anders dargestellt ist.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,

Figur 1    eine Ansicht auf ein erfindungsgemäßen Lüfterrad eines erfindungsgemäßen Lüfters,

Figur 2    eine Detaildarstellung aus Figur 1.

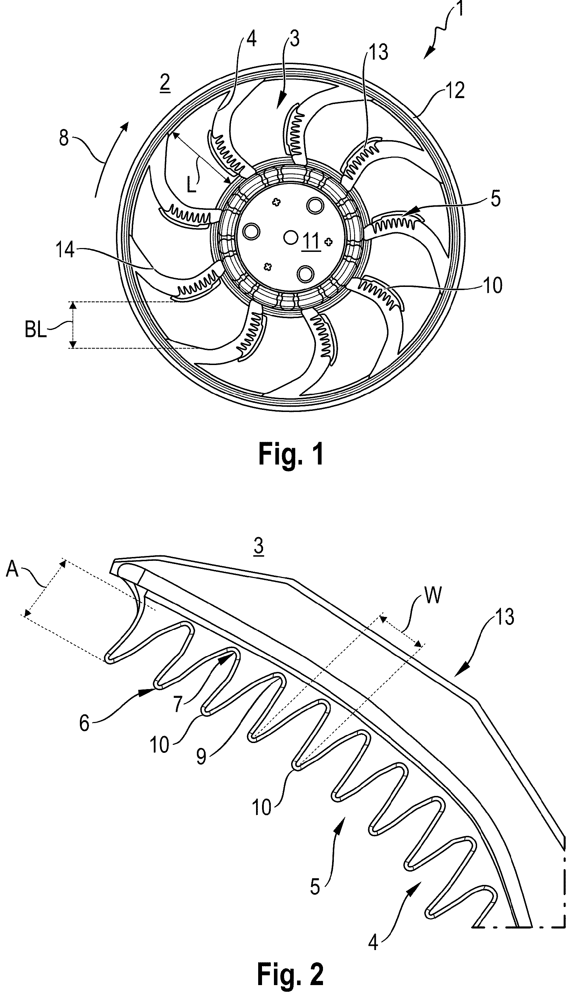

Entsprechend der Figur 1 weist ein erfindungsgemäßes Lüfterrad 1 eines erfindungsgemäßen Lüfters 2, beispielsweise für ein nicht näher dargestelltes Elektrofahrzeug, zumindest zwei Lüfterblätter 3 (vergleiche auch Figur 2) auf, die an einer jeweiligen Blattvorderkante 4 eine wellen- oder zackenförmige Konturlinie 5 mit Vorsprüngen 6 und Ausnehmungen 7 aufweisen. Die Richtung der Blattvorderkante 4 ist dabei in Drehrichtung Richtung 8 ausgerichtet.

Gemäß der Figur 1 weist dabei das erfindungsgemäße Lüfterrad 1 insgesamt neun Lüfterblätter 3 auf, wobei ein solches erfindungsgemäßes Lüfterrad 1 auch weniger oder mehr derartiger Lüfterblätter 3 besitzen kann.

Erfindungsgemäß ist nun ein Verhältnis einer Höhe A (vergleiche Figur 2) der Vorsprünge 6 zu einer Wellenlänge W von einem Wellental 9 zu einem benachbarten Wellental 9 oder von einem Wellenberg 10 zu einem benachbarten Wellenberg 10 (vergleiche Figur 2) wie folgt definiert:

$$A/W \geq 1.$$

Durch die vergleichsweise schlanken und eine große Höhe A aufweisenden Vorsprünge 6 kann ein nicht nur effizienter, sondern auch vergleichsweise geräuscharmer Betrieb des Lüfterrades 1 erreicht werden, was insbesondere beim Einsatz in Elektrofahrzeugen, welche als besonders geräuschsensibel gelten, von großem Vorteil ist.

Die Höhe A der Vorsprünge 6 kann dabei entlang der Konturlinie 5 unterschiedlich sein.

Um sowohl die Effizienz weiter steigern zu können, ohne dabei eine deutliche Steigerung der Geräuschemissionen in Kauf nehmen zu müssen, kann das Verhältnis der Höhe A der Vorsprünge 6 zu einer Wellenlänge W von einem Wellental 9 zu einem benachbarten Wellental 9 oder von einem Wellenberg 10 zu einem benachbarten Wellenberg 10 auch $\geq 1,5$ bzw. $\geq 2,0$ sein.

Betrachtet man die Vorsprünge 6 und insbesondere deren freies Ende, d. h. den Wellenberg 10, so kann man entsprechend der Figur 2 erkennen, dass der Wellenberg 10, d. h. die Spitze abgerundet ausgebildet ist. Selbstverständlich sind auch spitz zulaufende Wellenberge 10 oder eckig ausgebildete Wellenberge 10 denkbar.

Die Höhe A der Vorsprünge 6 entspricht dabei zumindest 10 % einer überströmten Länge BL des Lüfterblattes 3 (vergleiche Fig. 1), bevorzugt zumindest 15 % einer überströmten Länge BL, besonders bevorzugt zumindest 20 % einer überströmten Länge BL des Lüfterblattes 3. Über das Verhältnis der Höhe A der Vorsprünge 6 zur überströmten Länge BL der Lüfterblätter 3 kann weiter Einfluss sowohl auf die Effizienz als auch auf die Geräuschentwicklung während des Betriebs des Lüfterrades 1 genommen werden.

Betrachtet man die Figur 1 weiter, so kann man erkennen, dass sich die Konturlinie 5 nur bis ca. 70 % der radialen Länge L des Lüfterblattes 3 erstreckt. Die Konturlinie 5 ist demzufolge an einem inneren Bereich des Lüfterblattes 3 angeordnet, an welchem eine geringere Umfangsgeschwindigkeit im Betrieb des Lüfters 2 vorliegt. Besonders bevorzugt kann sich dabei die Konturlinie 5 auch nur bis ca. 50 % der radialen Länge L des Lüfterblattes 1 erstrecken.

Die Lüfterblätter 3 erstrecken sich dabei von einer Nabe 11 zu einem außenliegenden Ring 12 und sind dabei vorzugsweise sowohl einstückig mit der Nabe 11 als auch mit dem Ring 12 verbunden. Die Konturlinie 5 wiederum kann beabstandet zur Nabe 11 angeordnet sein bzw. beginnen oder aber direkt an der Nabe 11.

Betrachtet man die Figuren 1 und 2 weiter, so kann man erkennen, dass die Vorsprünge 6 in Umfangsrichtung, d. h. in Drehrichtung 8, relativ zum Lüfterblatt 3 geneigt sind, wodurch sich ein verbessertes aerodynamisches Verhältnis ergibt.

Zumindest ein Vorsprung 6 kann darüber hinaus eine größere Dicke aufweisen als das übrige Lüfterblatt 3, wobei ein solcher aufgedickter Vorsprung 6 fluchtend in das Lüfterblatt 3 übergehen kann, wodurch insbesondere ein verbessertes aerodynamisches Verhalten als auch eine Reduzierung von Kerbspannungen erreicht werden kann.

Aufgrund der filigranen Ausführung der Vorsprünge 6 und der im Betrieb des Lüfterrades 1 auftretenden Kräfte können die Vorsprünge 6 aus einem anderen Material ausgebildet sein als das Lüfterblatt 3, so ist beispielsweise denkbar, dass das Lüfterblatt 3 aus Kunststoff und die Vorsprünge 6 aus Metall ausgebildet sind. Die Vorsprünge 6 und die Ausnehmungen 7 der Konturlinie 5 können dabei Bestandteil eines Inlays 13, insbesondere eines metallischen Inlays, sein, welches mit dem insbesondere aus Kunststoff ausgebildeten Lüfterblatt 3 verbunden wird. Die Verbindung des Inlays 13 mit dem Lüfterblatt 3 kann dabei beispielsweise in einem Kunststoffspritzgießwerkzeug erfolgen, sodass in diesem Fall das Lüfterblatt 3 und das Inlay 13 als 2K-Kunststoffspritzgussteil ausgebildet sind. Hierdurch sind nicht nur eine einfache Fertigung sowie eine erhöhte Festigkeit des Inlays 13 mit den daran angeordneten Vorsprüngen 6 erreichbar, sondern auch eine zuverlässige und feste Verbindung mit dem Kunststoff des Lüfterblattes 3. Generell kann das gesamte Lüfterrad 1 mit Ausnahme der Inlays 13 als einstückiges Kunststoffspritzgussteil ausgebildet sein, wobei alternativ auch denkbar ist, dass sowohl die Vorsprünge 6 mit den Ausnehmungen 7 als auch die Lüfterblätter 3, die Nabe 11 und der Ring 12 als einstückiges Kunststoffspritzgussteil ausgebildet sind. In diesem Fall ist das gesamte Lüfterrad 1 aus ein und demselben Werkstoff, insbesondere Kunststoff, ausgebildet. Auch eine Ausbildung aus Metall des gesamten Lüfterrades 1 ist rein theoretisch denkbar.

Erfindungsgemäß ist die Konturlinie 5 an der Blattvorderkante 4 angeordnet, wobei denkbar ist, dass eine derartige Konturlinie 5 auch an einer Blatthinterkante 14 angeordnet ist. Hierdurch lässt sich eine nochmalige Steigerung der Effizienz des Lüfterrades 1 erreichen, ohne dabei eine erhöhte Geräuschemission in Kauf nehmen zu müssen.

Zwei direkt benachbarte Vorsprünge 6 können darüber hinaus miteinander verbunden sein, insbesondere über eine nicht gezeigte Verbindung, die insbesondere aus einer Ebene des Lüfterblattes 3 herausgehoben ist.

Mit dem erfindungsgemäßen Lüfterrad 1 und dem erfindungsgemäßen Lüfter2 lässt sich eine deutliche Steigerung der Effizienz erreichen, ohne dabei eine erhöhte Geräuschemission in Kauf nehmen zu müssen, was insbesondere beim Einsatz in geräuschsensiblen Kraftfahrzeugen, insbesondere in Elektrofahrzeugen, von großem Vorteil ist. Zudem kann das erfindungsgemäße Lüfterrad 1 fertigungstechnisch einfach und kostengünstig hergestellt werden.

Bezugszeichenliste

1. Lüfterrad
2. Lüfter
3. Lüfterblatt
4. Blattvorderkante
5. Konturlinie
6. Vorsprung
7. Ausnehmung
8. Drehrichtung
9. Wellental
10. Wellenberg
11. Nabe
12. Ring
13. Inlay
14. Blatthinterkante

**Patentansprüche**

1. Lüfterrad (1) für einen Lüfter (2) mit zumindest zwei Lüfterblätter (3), die an einer jeweiligen Blattvorderkante (4) eine wellen- oder zackenartige Konturlinie (5) mit Vorsprüngen (6) und Ausnehmungen (7) aufweisen,
   **dadurch gekennzeichnet,**
   **dass** ein Verhältnis einer Höhe A der Vorsprünge (6) zu einer Wellenlänge W von einem Wellental (9) zu einem Wellental (9) wie folgt definiert ist

$$A/W \geq 1.$$

2. Lüfterrad (1) nach Anspruch 1,
   **dadurch gekennzeichnet,**
   **dass** das Verhältnis wie folgt definiert ist

$$A/W \geq 1{,}5, \text{ insbesondere } A/W \geq 2{,}0.$$

3. Lüfterrad (1) nach Anspruch 1 oder 2,
   **dadurch gekennzeichnet,**
   **dass** die Vorsprünge (6) als runde und/oder eckige Wellenberge (10) oder als Zacken ausgebildet sind.

4. Lüfterrad (1) nach einem der vorhergehenden Ansprüche,
   **dadurch gekennzeichnet,**
   **dass** die Höhe A zumindest 10% einer überströmten Länge BL, bevorzugt zumindest 15% einer überströmten Länge BL, besonders bevorzugt zumindest 20% einer überströmten Länge BL, des Lüfterblattes (3) entspricht.

5. Lüfterrad (1) nach einem der vorhergehenden Ansprüche,
   **dadurch gekennzeichnet,**

   **dass** sich die Konturlinie (5) nur bis ca. 70%, bevorzugt nur bis ca. 50%, einer radialen Länge L des Lüfterblattes (3) erstreckt.

6. Lüfterrad (1) nach einem der vorhergehenden Ansprüche,
   **dadurch gekennzeichnet,**

   **dass** die Konturlinie (5) an einer Nabe (11) beginnt, oder
   **dass** die Konturlinie (5) beabstandet zu einer Nabe (11) beginnt.

7. Lüfterrad (1) nach einem der vorhergehenden Ansprüche,
   **dadurch gekennzeichnet,**
   **dass** zumindest ein Vorsprung (6) in Umfangsrichtung relativ zum Lüfterblatt (3) geneigt ist.

8. Lüfterrad (1) nach einem der vorhergehenden Ansprüche,
   **dadurch gekennzeichnet,**
   **dass** zumindest ein Vorsprung (6) eine größer Dicke aufweist als das übrige Lüfterblatt (3).

9. Lüfterrad (1) nach einem der vorhergehenden Ansprüche,
   **dadurch gekennzeichnet,**
   **dass** zumindest ein Vorsprung (6) mit größerer Dicke fluchtend in das Lüfterblatt (3) übergeht.

10. Lüfterrad (1) nach einem der vorhergehenden Ansprüche,
    **dadurch gekennzeichnet,**
    **dass** die Vorsprünge (6) aus einem anderen Material ausgebildet sind als das Lüfterblatt (3).

11. Lüfterrad (1) nach einem der vorhergehenden Ansprüche,
    **dadurch gekennzeichnet,**
    **dass** das Lüfterblatt (3) und die Vorsprünge (6) als 2K-Kunststoffspritzgussteil ausgebildet sind.

12. Lüfterrad (1) nach einem der vorhergehenden Ansprüche,
    **dadurch gekennzeichnet,**
    **dass** das Lüfterblatt (3) an seiner Blatthinterkante (14) ebenfalls eine wellen- oder zackenartige Konturlinie (5) mit Vorsprüngen (6) und Ausnehmungen (7) aufweist.

13. Lüfter (2), insbesondere für ein Klimatisierungsgerät eines Elektrofahrzeugs, mit einem Lüfterrad (1) nach einem der vorhergehenden Ansprüche.

**Fig. 1**

**Fig. 2**

Europäisches
Patentamt

European
Patent Office

Office européen
des brevets

**EUROPÄISCHER RECHERCHENBERICHT**

Nummer der Anmeldung

EP 25 21 5801

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2021 105225 A1 (EBM PAPST MULFINGEN GMBH & CO KG [DE]) 16. September 2021 (2021-09-16) | 1-9, 11-13 | INV. F04D29/02 F04D29/30 |
| Y | * Absätze [0021], [0022], [0037] - [0045] * * Ansprüche 1-13 * * Abbildungen 1-7 * | 10 | F04D29/38 |
| | ----- | | |
| X | CH 662 618 A5 (GEBHARDT GMBH WILHELM) 15. Oktober 1987 (1987-10-15) * Seite 3, linke Spalte, Zeile 40 - Seite 3, rechte Spalte, Zeile 49 * * Ansprüche 1-8 * * Abbildungen 1-9 * | 1-6, 11-13 | |
| | ----- | | |
| Y | US 2019/003312 A1 (POUZADOUX FRÉDÉRIC JEAN-BERNARD [FR] ET AL) 3. Januar 2019 (2019-01-03) * Absätze [0016] - [0021] * * Abbildungen 2-4 * | 10 | |
| | ----- | | |

RECHERCHIERTE SACHGEBIETE (IPC)

F04D

Der vorliegende Recherchenbericht wurde für alle Patentansprüche erstellt

| Recherchenort | Abschlußdatum der Recherche | Prüfer |
|---|---|---|
| Den Haag | 9. April 2026 | Gombert, Ralf |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 21 5801

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-04-2026

| Im Recherchenbericht angeführtes Patentdokument | Datum der Veröffentlichung | Mitglied(er) der Patentfamilie | Datum der Veröffentlichung |
|---|---|---|---|
| DE 102021105225 A1 | 16-09-2021 | CA 3168948 A1 | 16-09-2021 |
| | | CA 3168950 A1 | 16-09-2021 |
| | | CA 3184635 A1 | 16-09-2021 |
| | | CA 3184944 A1 | 16-09-2021 |
| | | CN 115176088 A | 11-10-2022 |
| | | CN 115190945 A | 14-10-2022 |
| | | CN 115559934 A | 03-01-2023 |
| | | CN 115653919 A | 31-01-2023 |
| | | DE 102021105225 A1 | 16-09-2021 |
| | | DE 102021105226 A1 | 16-09-2021 |
| | | EP 4034769 A1 | 03-08-2022 |
| | | EP 4034770 A1 | 03-08-2022 |
| | | EP 4083432 A1 | 02-11-2022 |
| | | EP 4083433 A1 | 02-11-2022 |
| | | KR 20220146472 A | 01-11-2022 |
| | | KR 20220146705 A | 01-11-2022 |
| | | KR 20220150292 A | 10-11-2022 |
| | | KR 20220151219 A | 14-11-2022 |
| | | US 2023003229 A1 | 05-01-2023 |
| | | US 2023132350 A1 | 27-04-2023 |
| | | US 2023138644 A1 | 04-05-2023 |
| | | US 2024084815 A1 | 14-03-2024 |
| | | WO 2021180559 A1 | 16-09-2021 |
| | | WO 2021180560 A1 | 16-09-2021 |
| CH 662618 A5 | 15-10-1987 | CH 662618 A5 | 15-10-1987 |
| | | DE 3137554 A1 | 31-03-1983 |
| | | FR 2513324 A1 | 25-03-1983 |
| | | GB 2105791 A | 30-03-1983 |
| US 2019003312 A1 | 03-01-2019 | BR 112018012664 A2 | 04-12-2018 |
| | | CA 3009226 A1 | 29-06-2017 |
| | | CN 108463614 A | 28-08-2018 |
| | | EP 3394398 A1 | 31-10-2018 |
| | | FR 3045712 A1 | 23-06-2017 |
| | | JP 6927978 B2 | 01-09-2021 |
| | | JP 2019500537 A | 10-01-2019 |
| | | RU 2018126658 A | 24-01-2020 |
| | | US 2019003312 A1 | 03-01-2019 |
| | | WO 2017109407 A1 | 29-06-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 11035233 B2
- WO 2013180296 A1